# EUROPEAN PATENT APPLICATION

(11) **EP 4 089 631 A1**
(43) Date of publication of application: **16.11.2022**
(21) Application number: 21752863.7
(22) Date of filing: 03.02.2021
(51) Int. Cl.: G06T 7/00, G06T 15/20, G06T 19/00

(54) **IMAGE PROCESSING DEVICE, IMAGE PROCESSING METHOD, METHOD OF GENERATING LEARNED MODEL, AND PROGRAM**

(30) Priority: 14.02.2020 JP 2020023374
(71) Applicant: Canon Kabushiki Kaisha, Ohta-ku Tokyo 146-8501 (JP)
(72) Inventor: FUJITA Shu, Tokyo 146-8501 (JP); YONEDA Keigo, Tokyo 146-8501 (JP); ARATANI Shuntaro, Tokyo 146-8501 (JP); DATE Atsushi, Tokyo 146-8501 (JP); FUJII Toshiaki, Nagoya-shi, Aichi 464-8601 (JP); TAKAHASHI Keita, Nagoya-shi, Aichi 464-8601 (JP); SUGIE Takashi, Nagoya-shi, Aichi 464-8601 (JP)
(74) Representative: WESER & Kollegen Patentanwälte PartmbB
(86) International application number: PCT/JP2021/003988
(87) International publication number: WO 2021/161878

(57) **Abstract**

An image generation apparatus 1 obtains a virtual viewpoint image generated based on captured images obtained by image capture of an object by a plurality of image capture devices 2 from a plurality of viewpoints and three-dimensional shape data on the object, and removes noise in the virtual viewpoint image obtained, the noise being generated due to accuracy of the three-dimensional shape data.

## Description

### Technical Field

The present disclosure relates to a virtual viewpoint image.

### Background Art

There is technology for generating virtual viewpoint content representing a view from a virtual viewpoint using a plurality of images obtained by a plurality of image capture devices. PTL 1 discloses generating virtual viewpoint content by first determining a color for each element forming a subject's three-dimensional shape estimated based on images obtained by image capture of the subject from a plurality of directions, the color being determined using the plurality of captured images.

### Citation List

### Patent Literature

PTL 1: Japanese Patent Laid-Open No. 2019-057248

### Summary of Invention

In a case where a virtual viewpoint image is generated by the method of PTL 1, the accuracy of the three-dimensional shape estimation affects the image quality of the virtual viewpoint image. In other words, without proper three-dimensional shape estimation, the image quality of the virtual viewpoint image may be degraded. For example, in a region in an image capture region where objects (subjects) are very close to each other, i.e., such as a region where occlusion occurs, an object which does not actually exist may be regarded as existing, and three-dimensional shape estimation may be performed thereon. In this case, among the plurality of elements forming the three-dimensional shape, incorrect colors are determined for elements of an object which does not actually exist but is determined as existing. As a result, noise may occur in the virtual viewpoint image, degrading its image quality.

The present disclosure aims to reduce degradation of the image quality of a virtual viewpoint image.

An image processing apparatus according to an aspect of the present disclosure is an image processing apparatus including: obtainment means for obtaining a virtual viewpoint image generated based on a plurality of captured images obtained by image capture of an object by a plurality of image capture devices from a plurality of viewpoints and three-dimensional shape data on the object; and removal means for removing noise in the virtual viewpoint image obtained by the obtainment means, the noise being generated due to accuracy of the three-dimensional shape data.

The present disclosure can reduce degradation of the image quality of a virtual viewpoint image.

Further features of the present disclosure will become apparent from the following description of exemplary embodiments with reference to the attached drawings.

### Brief Description of Drawings

[Fig. 1] Fig. 1 is a diagram showing an example configuration of an image processing system.
[Fig. 2] Fig. 2 is a diagram illustrating an example of a case where jelly noise occurs.
[Fig. 3] Fig. 3 is a diagram illustrating an overview of a learning model.
[Fig. 4] Fig. 4 is a diagram showing an example hardware configuration of an image generation apparatus.
[Fig. 5] Fig. 5 is a flowchart showing an example of processing performed by the image generation apparatus.
[Fig. 6] Fig. 6 is a schematic diagram of a camera coordinate system and a camera image coordinate system.
[Fig. 7] Fig. 7 is a diagram showing the configuration of the image processing system.
[Fig. 8] Fig. 8 is a diagram illustrating a jelly noise map.
[Fig. 9] Fig. 9 is a diagram illustrating an overview of a learning mode for detecting a jelly noise region.
[Fig. 10] Fig. 10 is a diagram illustrating an overview of a learning model for repairing a jelly noise region.
[Fig. 11] Fig. 11 is a flowchart showing an example of processing performed by an image generation apparatus 7.
[Fig. 12] Fig. 12 is a flowchart showing an example of processing performed by the image generation apparatus 7.

### Description of Embodiments

Modes for carrying out an aspect of the present disclosure are described below with reference to the drawings. Note that the following embodiments are not intended to limit the matters of the present disclosure, and not all the combinations of the features described in the present embodiments are necessarily essential to the solutions provided by an aspect of the matters of the present disclosure. Note that the same reference numeral is used to describe the same configurations.

### «First Embodiment»

In the present embodiment, an example is discussed of performing processing for repairing (or mending or correcting) a virtual viewpoint image containing noise that occurs due to a result of low-accuracy shape estimation (hereinafter referred to as jelly noise). For the repairing processing, a learned model (a neural network (called an NN below)) is used. Specifically, as a result of inputting a virtual viewpoint image containing jelly noise to a learned model, a virtual viewpoint image removed of (improved in) a jelly noise part is outputted from the learned model.

Note that jelly noise occurs due to three-dimensional shape estimation estimating, because of occlusion, that an object (which may also be called a subject) which actually does not exist exists. Jelly noise is also likely to occur in an object having a complicated shape, such as one including many irregularities.

An image processing system of the present embodiment generates a virtual viewpoint image representing a view from a virtual viewpoint based on a plurality of captured images captured and obtained by a plurality of image capture devices from different directions, the states of the image capture devices, and virtual viewpoint information indicating the virtual viewpoint.

The plurality of image capture devices capture images of an image capture region from a plurality of different directions. The image capture region is, for example, a region surrounded by a plane and any given height in a stadium in which, e.g., rugby or soccer games are held. The plurality of image capture devices are installed at different locations and in different directions in such a manner as to surround such an image capture region, and capture images synchronously. Note that the image capture devices do not have to be installed along the entire perimeter of the image capture region, and may be installed only at part of the image capture region due to, e.g., restrictions on installment locations. There is no limitation as to the number of the image capture devices, and in an example where the image capture region is a rugby stadium, approximately several tens to several hundreds of image capture devices may be installed around the stadium.

A plurality of image capture devices having different angles of view, such as telephoto cameras and wide-angle cameras, may be installed. For example, using telephoto cameras allows images of an object to be captured at a high resolution and therefore improves the resolution of a virtual viewpoint image generated. Also, for example, using wide-angle cameras can reduce the number of cameras because a wide range can be captured by a single camera. The image capture devices are synchronized based on information on a single time in real world, and a captured video has image capture time information added to each image frame.

Note that one image capture device may be formed by one camera or may be formed by a plurality of cameras. Also, an image capture device may include a device other than a camera.

The states of an image capture device are the image capture device's position, attitude (orientation and image capture direction), focal length, optical center, distortion, and the like. The position and attitude (orientation and image capture direction) of an image capture device may be controlled by the image capture device itself or by control of a panhead for controlling the position and attitude of the image capture device. Although data indicative of the states of an image capture device are referred to as camera parameters of the image capture device in the following description, the parameters may include a parameter controlled by another device such as a panhead. Also, camera parameters related to the position and attitude (orientation and image capture direction) of an image capture device are what is called extrinsic parameters. Parameters related to the focal length, image center, and distortion of an image capture device are what is called intrinsic parameters. The position and attitude of an image capture device are expressed by a coordinate system having three axes orthogonal to a single origin (hereinafter referred to as a world coordinate system).

A virtual viewpoint image is also called a free viewpoint image, but a virtual viewpoint image is not limited to an image corresponding to a viewpoint designated freely (arbitrary) by a user, and includes, e.g., an image corresponding to a viewpoint selected by a user from a plurality of candidates. The designation of a virtual viewpoint may be performed by a user operation or automatically based on, e.g., image analysis results. Also, although a virtual viewpoint image is mainly described as being a still image in the present embodiment, a virtual viewpoint image may be a moving image.

Virtual viewpoint information used for generation of a virtual viewpoint image is information indicating, e.g., the position and orientation of a virtual viewpoint. Specifically, virtual viewpoint information includes parameters representing the three-dimensional position of a virtual viewpoint and parameters representing the orientation of the virtual viewpoint in pan, tilt, and roll directions. Note that the contents of the virtual viewpoint information are not limited to the above. For example, parameters in the virtual viewpoint information may include a parameter representing the size of the field of view (the angle of view) of the virtual viewpoint. Also, virtual viewpoint information may have parameters for a plurality of frames. Specifically, virtual viewpoint information may be information having parameters corresponding to a plurality of respective frames forming moving images of virtual viewpoint images and indicating the position and orientation of the virtual viewpoint at each of a plurality of consecutive time points.

For example, a virtual viewpoint image is generated by the following method. First, image capture devices capture their image capture regions from different directions, and a plurality of captured images are thereby obtained. Next, from the plurality of captured images, foreground images and background images are obtained, the foreground images being an extraction of a foreground region corresponding to an object such as a person or a ball, the background images being an extraction of a background region other than the foreground region. The foreground images and the background images have texture information (such as color information). Then, a foreground model representing the three-dimensional shape of the object and texture data for coloring the foreground model are generated based on the foreground images. The foreground model is estimated using a shape estimation method such as, for example, the Shape-from-Silhouette method. A background model is generated by making three-dimensional measurements of, for example, the stadium or venue in advance. Also, texture data for coloring a background model representing the three-dimensional shape of a background such as the stadium is generated based on the background images. Then, the texture data is mapped to the foreground model and the background model, and rendering is performed based on the virtual viewpoint indicated by the virtual viewpoint information, thereby generating a virtual viewpoint image. Note that the virtual viewpoint image generation method is not limited to this, and various methods can be used such as a method for generating a virtual viewpoint image by projective transformations of captured images, without using foreground models and background models.

A foreground image is an extracted image of the region of an object (a foreground region) from a captured image captured and obtained by an image capture device. An object extracted as a foreground region is typically a dynamic object (a dynamic body) which is active (may change in its position or shape) in a case where the object is captured chronologically from the same direction. Examples of an object include, in a sporting event, a person such as a player or a referee in the field where a game is held and may also include a ball in addition to a person in a case of a ball game. Also, in a case of a concert, an entertainment, or the like, examples of an object include a singer, a player, a performer, or an emcee.

A background image is an image of a region (a background region) different from at least a foreground object. Specifically, a background image is an image where foreground objects are removed from a captured image. Also, a background is an image capture target which is stationary or stays nearly stationary in a case where the background is captured chronologically from the same direction. Examples of such an image capture target include the stage for a concert or the like, a stadium where an event such as a sporting event is held, a structure such as a goal used in a ball game, and a field. Note, however, that a background is a region different from at least a foreground object, and an image capture target may also include physical objects and the like other than an object and a background.

### <System Configuration>

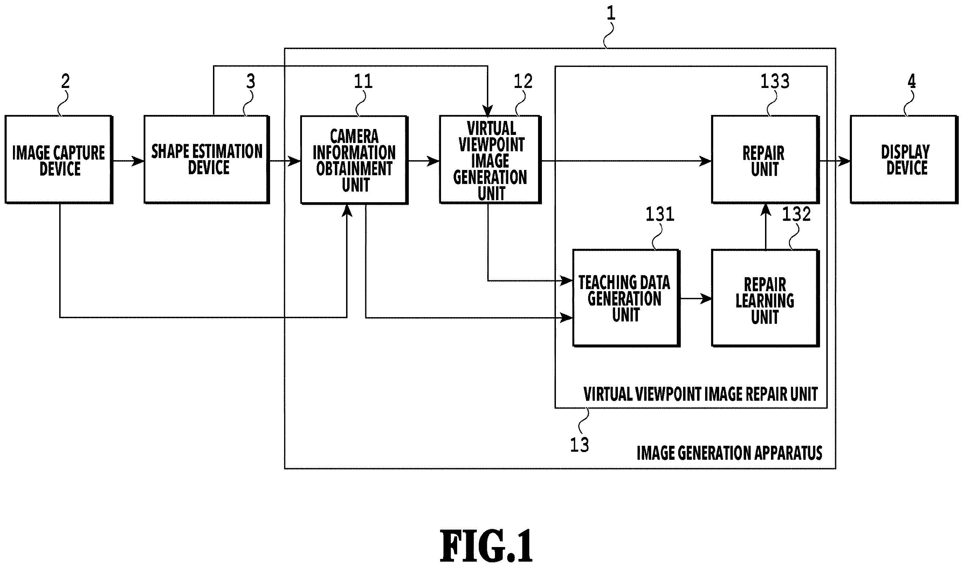

Fig. 1 is a diagram showing an example configuration of the image processing system of the present embodiment. The image processing system has an image generation apparatus 1, a plurality of image capture devices 2, a shape estimation device 3, and a display device 4. Fig. 1 shows only one of the image capture devices 2, omitting the rest of the image capture devices 2.

The image generation apparatus 1 as an image processing apparatus is connected to the image capture devices 2, the shape estimation device 3, and the display device 4 in a daisy chain or via a predetermined network. The image generation apparatus 1 obtains captured image data from the image capture devices 2. The image generation apparatus 1 also obtains object's three-dimensional shape data from the shape estimation device 3. Then, the image generation apparatus 1 generates virtual viewpoint image data based on the captured image data obtained from the image capture devices 2 and the three-dimensional shape data obtained from the shape estimation device 3. An image represented by captured image data is referred to as a captured image, and an image represented by virtual viewpoint image data is referred to as a virtual viewpoint image. To simplify descriptions, the following description may express, for example, obtaining or generating various kinds of image data simply as obtaining or generating a virtual viewpoint image. To generate a virtual viewpoint image, the image generation apparatus 1 receives designation of virtual viewpoint information and generates a virtual viewpoint image based on the virtual viewpoint information. For example, virtual viewpoint information is designated by a user (an operator) using an input unit (not shown) such as a joystick, a jog dial, a touch panel, a keyboard, and a mouse. Note that designation of virtual viewpoint information is not limited to this, and virtual viewpoint information may be designated automatically by, e.g., recognition of an object. A virtual viewpoint image generated by the image generation apparatus 1 is outputted to the display device 4.

Each image capture device 2 has its own unique identification number so that the image capture device 2 may be distinguished from the other image capture devices 2. The image capture device 2 may have other functions such as a function of extracting a foreground image from an image captured and obtained and may include hardware (such as a circuit or a device) for implementing that function.

The shape estimation device 3 obtains captured images or foreground images from the image capture devices 2, estimates the three-dimensional shape of an object, and outputs three-dimensional shape data. The display device 4 obtains a virtual viewpoint image from the image generation apparatus 1 and outputs the virtual viewpoint image using a display device such as a display.

Next, the configuration of the image generation apparatus 1 is described. The image generation apparatus 1 has a camera information obtainment unit 11, a virtual viewpoint image generation unit 12, and a virtual viewpoint image repair unit 13.

The camera information obtainment unit 11 obtains captured images from the plurality of image capture devices 2. The camera information obtainment unit 11 also obtains camera parameters of each of the plurality of image capture devices 2. Note that the camera information obtainment unit 11 may calculate and obtain the camera parameters of the image capture devices 2. For example, the camera information obtainment unit 11 calculates corresponding points from the captured images obtained from the plurality of image capture devices 2. Then, the camera information obtainment unit 11 calibrates the position, attitude, and the like of the viewpoint of each image capture device by performing optimization to minimize error in projection of the corresponding point to the viewpoint of the image capture device, and camera parameters may thus be calculated. The calibration method may be any of existing methods. Camera parameters may be obtained in synchronization with captured images, may be obtained in the preparation stage, or may be obtained out of synchronization with captured images as needed.

The virtual viewpoint image generation unit 12 generates a virtual viewpoint image based on captured images from the image capture devices 2 obtained by the camera information obtainment unit 11, the camera parameters, three-dimensional shape data outputted from the shape estimation device 3, and the virtual viewpoint information.

The virtual viewpoint image repair unit 13 repairs a virtual viewpoint image generated by the virtual viewpoint image generation unit 12. This is because a virtual viewpoint image generated by the virtual viewpoint image generation unit 12 may contain jelly noise attributable to low-accuracy shape estimation. The virtual viewpoint image repair unit 13 removes this jelly noise.

### <Description of Jelly Noise>

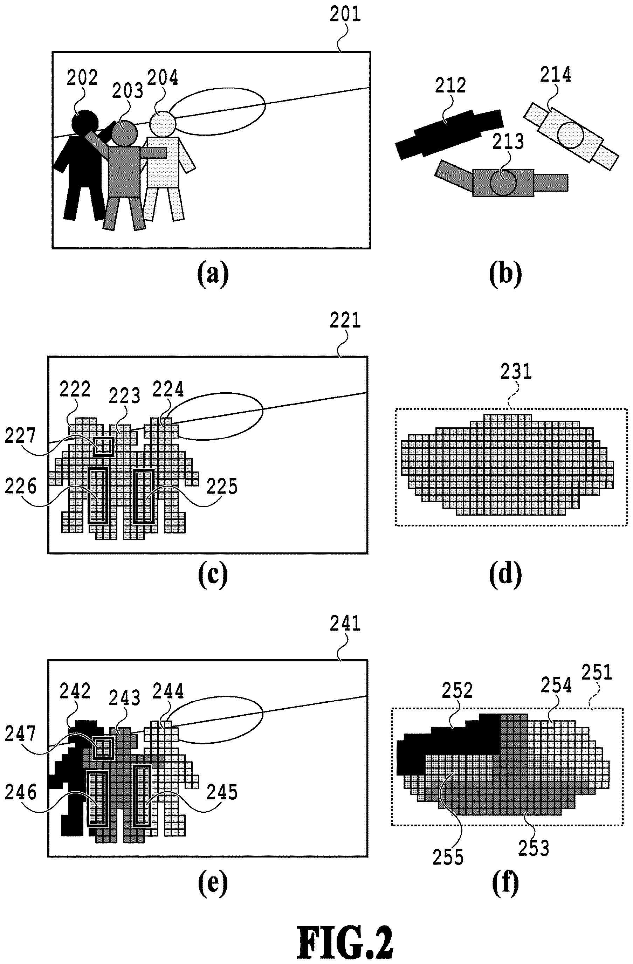

Fig. 2 is a diagram illustrating an example of a case where the above-described jelly noise occurs due to low-accuracy shape estimation. Jelly noise is described using Fig. 2. Fig. 2(a) shows a captured image 201 obtained by a certain image capture device 2 by capturing an image of objects. The captured image 201 shows objects 202, 203, 204. Fig. 2(b) shows an example of how the objects 202, 203, 204 look like from above. Objects 212, 213, 214 in Fig. 2(b) correspond to the objects 202, 203, 204 in Fig. 2(a), respectively.

Fig. 2(c) is an example of an image 221 of a case where a virtual viewpoint is designated at the viewpoint of a certain image capture device 2 that obtained the captured image 201, using results of object shape estimation using the plurality of image capture devices 2 capturing the objects 202, 203, 204 in Fig. 2(a). Regions 222, 223, 224 in Fig. 2(c) correspond to the objects 202, 203, 204, respectively. Note that the colors have yet to be determined for the elements of the regions 222, 223, 224 in Fig. 2(c). Fig. 2(c) shows that there are elements forming three-dimensional shape data corresponding to the regions 222, 223, 224.

In a case where the objects 202, 203, 204 in Fig. 2(a) are very close to each other, a region invisible from the plurality of image capture devices 2 occurs in the image capture region. In this case, the accuracy of shape estimation lowers, and for example, like regions 225, 226, 227 in Fig. 2(c), elements forming three-dimensional shape data may exist also in regions where objects do not actually exist. Fig. 2(d) is a diagram showing three-dimensional shape data represented by the regions 222 to 227 in Fig. 2(c) from above. In other words, as shown in Fig 2(d), the regions 222 to 227 are formed as one lump of three-dimensional shape data 231 due to the influence of occlusion.

Fig. 2(e) shows a virtual viewpoint image 241 obtained by coloring each element of the regions 222, 223, 224 in the image 221 in Fig. 2(c). Regions 242, 243, 244 in Fig. 2(e) correspond to the regions 222, 223, 224 in Fig. 2(c), respectively. Regions 245, 246, 247 in Fig. 2(e) correspond to the regions 225, 226, 227 in Fig. 2(c), respectively.

Fig. 2(f) is a diagram showing three-dimensional shape data represented by the regions 242 to 247 in Fig. 2(e) from above. Regions 252, 253, 254 in Fig. 2(f) are three-dimensional shape data corresponding to the objects 212, 213, 214 in Fig. 2(b). It can be expected that three-dimensional points at positions where objects exist, like the regions 242, 243, 244 in Fig. 2(e) or the regions 252, 253, 254 in Fig. 2(f), have the same colors as those of the original objects. However, for locations where objects do not actually exit, like the regions 245, 246, 247 in Fig. 2(e), it is highly likely that incorrect colors are assigned. A data region 255 which is part of the three-dimensional shape data in Fig. 2(f) is a region corresponding to an occlusion region surrounded by the objects 212, 213, 214 in Fig. 2(b). As a result of incorrect colors being assigned to these locations, a virtual viewpoint image containing jelly noise is generated, which means the image quality of the virtual viewpoint image being low. This is an example of how jelly noise is generated.

### <Description of the Virtual Viewpoint Image Repair Unit>

Referring back to Fig. 1, the description is continued. The virtual viewpoint image repair unit 13 repairs a virtual viewpoint image generated by the virtual viewpoint image generation unit 12 that may contain jelly noise. Note that the present embodiment assumes that a learned model obtained by neural network learning is generated, and a virtual viewpoint image is repaired using the learned model. The following describes the virtual viewpoint image repair unit 13. The virtual viewpoint image repair unit 13 has a teaching data generation unit 131, a repair learning unit 132, and a repair unit 133.

The teaching data generation unit 131 generates teaching data having a pair of an input and an answer, the input being a virtual viewpoint image generated by the virtual viewpoint image generation unit 12, the answer being a captured image from a camera having the corresponding viewpoint obtainable from the camera information obtainment unit 11. Note that an image as answer data may be an image obtained by actually shooting a real space or an image generated by interpolation of captured images from two actual cameras. Also, an image as answer data may be an image obtained by combining captured images from three or more actual cameras. Also, a camera simulation image obtained in a virtual three-dimensional space created by CG (computer graphics) may be used. Note, however, that in a case where a camera used for actual shooting is used as answer data, the position and attitude of the virtual viewpoint of a virtual viewpoint image to be inputted are limited to the position and attitude of the actual camera. Also, in a case where an image generated by interpolation of captured images from two actual cameras is used as answer data, two cameras having their image capture regions overlapping with each other are selected, and only a region captured by both or one of the cameras is effective answer data. Also, in a case of using a CG simulation image as answer data, the correct three-dimensional shape of an object is already known. However, the virtual viewpoint image generation unit 12 does not use the correct three-dimensional shape. Instead, a plurality of pieces of camera information obtained by simulation are inputted to the shape estimation device 3, and the virtual viewpoint image generation unit 12 uses, as an input, a virtual viewpoint image generated using a three-dimensional shape outputted from the shape estimation device 3. Also in cases of using an image generated by interpolation of captured images from actual cameras or a CG simulation image as answer data, a viewpoint corresponding to these images is used as the viewpoint of a virtual viewpoint image used as an input. In other words, the teaching data generation unit 131 generates teaching data in which the position and attitude of the viewpoint of a virtual viewpoint image as an input corresponds to the position and attitude of an image as answer data. In this way, the teaching data generation unit 131 generates proper teaching data. Note that teaching data is also called learning data.

Based on the teaching data generated by the teaching data generation unit 131, the repair learning unit 132 conducts learning by defining a loss function of the input with respect to the answer and repeatedly optimizing neural network parameters to minimize or maximize the loss function. Then, a model obtained by the learning (called a learned model) is outputted to the repair unit 133.

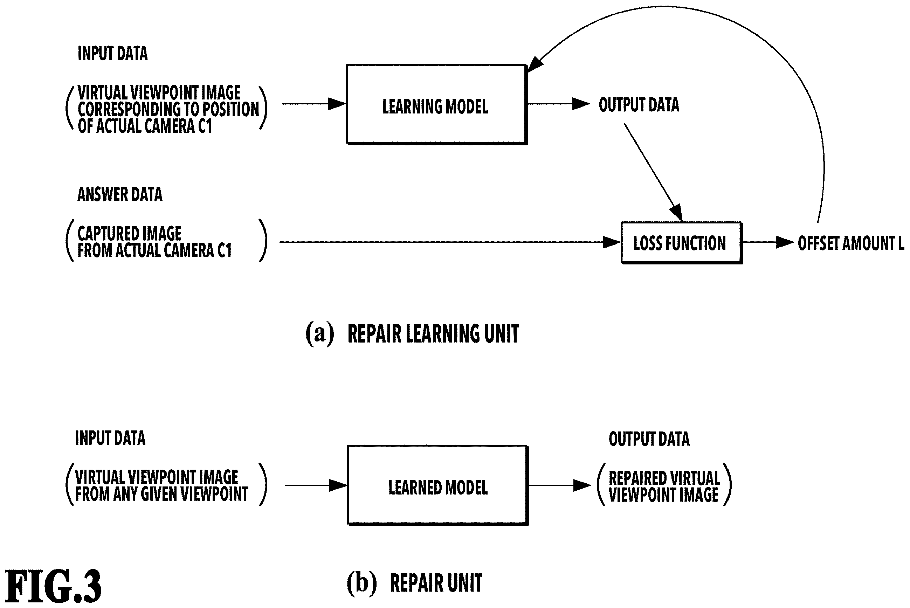

Fig. 3 is a diagram illustrating an overview of a learning model. Fig. 3(a) shows an example of learning processing performed by the repair learning unit 132. For example, learning is performed using teaching data having input data and answer data, the input data being a virtual viewpoint image corresponding to the viewpoint position of an actual camera C1, the answer data being a captured image captured by the actual camera C1. Then, learning is repeated to minimize or maximize an offset amount L between the input data and the answer data. Although an actual camera at one viewpoint is taken as an example here, learning is performed repeatedly using teaching data at the corresponding viewpoints of the image capture devices 2 forming the image processing system.

Note that the repair learning unit 132 may include an error detecting unit and an updating unit. The error detecting unit obtains error between teaching data and output data outputted from an output layer of a neural network in response to input data inputted to an input layer. The error detecting unit may calculate error between the teaching data and the output data from the neural network using a loss function. Based on the error obtained by the error detecting unit, the updating unit updates, e.g., connection weighting coefficients between nodes of the neural network so as to make the error small. The updating unit performs the update of the connection weighting coefficients or the like using, for example, backpropagation. Backpropagation is an algorithm for adjusting, e.g., a connection weighting coefficient between nodes of the neural network so as to make the above error small. Also, the present embodiment assumes that deep learning, which itself generates feature amounts and connection weighting coefficients for learning, is performed using a neural network. Note that as the network structure of a neural network used, any method may be employed as long as an input to and an output from the network are image data and the relation between the input and the output can be learned sufficiently.

The repair unit 133 repairs a virtual viewpoint image containing jelly noise by inputting the virtual viewpoint image given from the virtual viewpoint image generation unit 12 to the learned model obtained by the repair learning unit 132. The repaired virtual viewpoint image is outputted to the display device 4.

Fig. 3(b) shows an example of repair processing (inference processing) performed by the repair unit 133. In response to a virtual viewpoint image of any given virtual viewpoint being inputted as input data to the learned model obtained by the repair learning unit 132, a repaired virtual viewpoint image is outputted as output data.

### <Hardware Configuration>

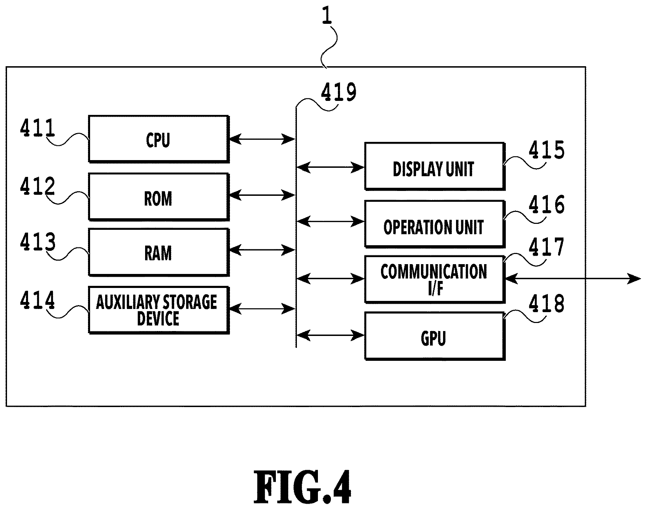

Fig. 4 is a diagram showing an example hardware configuration of the image generation apparatus 1. The image generation apparatus 1 has a CPU 411, a ROM 412, a RAM 413, an auxiliary storage device 414, a display unit 415, an operation unit 416, a communication I/F 417, a GPU 418, and a bus 419. The CPU 411 implements the functions of the image generation apparatus 1 shown in Fig. 1 by performing overall control of the image generation apparatus 1 using computer programs and data stored in the ROM 412 or the RAM 413. Note that the image generation apparatus 1 may have one or more pieces of dedicated hardware different from the CPU 411 and have the dedicated hardware execute at least part of the processing otherwise performed by the CPU 411. Examples of the dedicated hardware include an ASIC (Application-Specific Integrated Circuit), an FPGA (Field-Programmable Gate Array), and a DSP (Digital Signal Processor). The ROM 412 stores programs and the like that do not need changes. The RAM 413 temporarily stores therein programs and data supplied from the auxiliary storage device 414 and data and the like supplied from outside via the communication I/F 417. The auxiliary storage device 414 is formed of, for example, a hard disk drive or the like, and stores therein various kinds of data such as image data and audio data. The GPU 418 is capable of efficient computation by processing more pieces of data in parallel, and therefore it is effective to perform processing using the GPU 418 in a case of performing learning over a plurality of times using a learning model, such as deep learning. Thus, in addition to the CPU 411, the GPU 418 is used for the processing by the repair learning unit 132 in the present embodiment. Specifically, in a case of executing a learning program including a learning model, learning is performed by the CPU 411 and the GPU 418 performing computations in cooperation with each other. Note that only one of the CPU 411 and the GPU 418 may perform computations for the processing by the repair learning unit 132. Also, the repair unit 133 may use the GPU 418 like the repair learning unit 132 does.

The display unit 415 is formed of, for example, a liquid crystal display, an LED, or the like, and displays, e.g., a GUI (Graphical User Interface) for a user to operate the image generation apparatus 1. The operation unit 416 is formed by, for example, a keyboard, a mouse, a joy stick, a touch panel, or the like, and inputs various instructions to the CPU 411 in response to user operations. The CPU 411 operates as a display control unit controlling the display unit 415 and as an operation control unit controlling the operation unit 416.

The communication I/F 417 is used for communications between the image generation apparatus 1 and an external device. For example, in a case where the image generation apparatus 1 is connected to an external device in a wired manner, a communication cable is connected to the communication I/F 417. In a case where the image generation apparatus 1 has a function of communicating wirelessly with an external device, the communication I/F 417 includes an antenna. The bus 419 connects the units in the image generation apparatus 1 to one another to communicate information thereamong.

The display unit 415 and the operation unit 416 are inside the image generation apparatus 1 in the present embodiment, but at least one of the display unit 415 and the operation unit 416 may be outside the image generation apparatus 1 as a separate device.

### <Processing Flow>

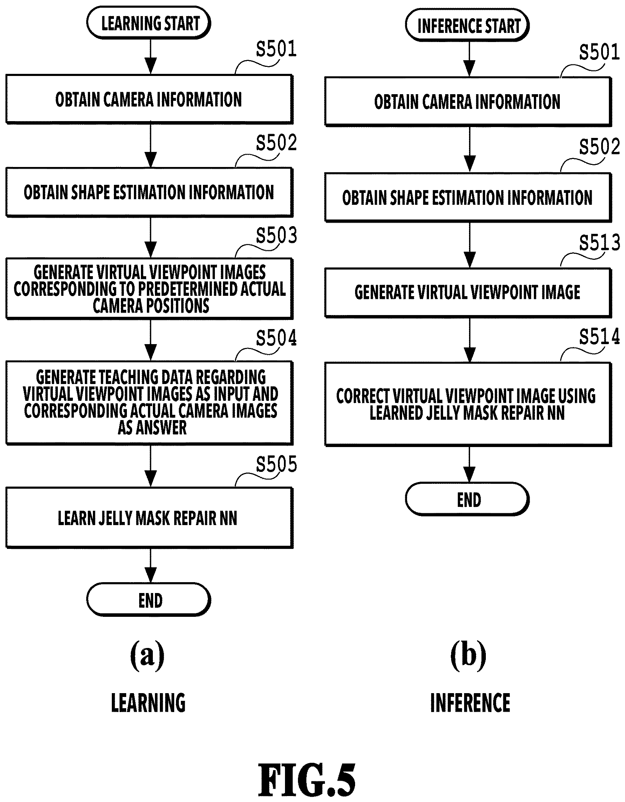

Fig. 5 is a flowchart showing an example of processing performed by the image generation apparatus 1 of the present embodiment. The processing shown in Fig. 5 is performed by the CPU 411 or the GPU 418 executing programs stored in the ROM 412 or the auxiliary storage device 414. Note that the letter "S" in the description of each processing means that it is a step in the flowchart (the same applies to the rest of the descriptions herein).

Fig. 5(a) is a flowchart showing learning processing performed by the repair learning unit 132. First, using Fig. 5(a), a description is given of a flowchart of processing for learning of a neural network for repairing a virtual viewpoint image.

In S501, the camera information obtainment unit 11 obtains camera information from the image capture devices 2. Camera information may include a captured image and camera parameters. Specifically, in S501, the camera information obtainment unit 11 obtains a plurality of captured images from the image capture devices 2. The captured images thus obtained are outputted to the virtual viewpoint image generation unit 12 and the teaching data generation unit 131. Note that the captured images obtained here are used as answer data in neural network learning. In S501, the camera information obtainment unit 11 also obtains camera parameters from the image capture devices 2. Note that the camera information obtainment unit 11 may calculate the camera parameters. Also, the camera parameters do not need to be calculated every time captured images are obtained, and only needs to be calculated at least once before generation of a virtual viewpoint image. The camera parameters thus obtained are outputted to the virtual viewpoint image generation unit 12.

In S502, the virtual viewpoint image generation unit 12 obtains information on a group of three-dimensional points forming an object (three-dimensional shape data) from the shape estimation device 3.

In S503, the virtual viewpoint image generation unit 12 generates a group of virtual viewpoint images corresponding to the positions of the viewpoints of the actual cameras. The group of virtual viewpoint images thus generated are outputted to the teaching data generation unit 131. Thus, the virtual viewpoint images generated in S503 are used as input data for neural network learning. In S503 of this example, virtual viewpoint images corresponding to the viewpoint positions of all the actual cameras are generated. However, in this example, not all the frames of these virtual viewpoint images are outputted to the teaching data generation unit 131, and a user selects in advance frames containing jelly noise and frames not containing jelly noise from frames shooting any foreground object in the virtual viewpoint images. Then, the virtual viewpoint image generation unit 12 outputs, to the teaching data generation unit 131, virtual viewpoint images selected randomly so that there are an equal scene ratio of frames containing jelly noise and frames not containing jelly noise. By also including scenes in which no jelly noise occurs as learning input data, it is expected that a region that does not need a major correction unlike a jelly noise region can also be learned.

Here, a method for generating a virtual viewpoint image is described. The virtual viewpoint image generation unit 12 executes processing for generating a foreground virtual viewpoint image (a virtual viewpoint image of an object region) and processing for generating a background virtual viewpoint image (a virtual viewpoint image other than an object region). The virtual viewpoint image generation unit 12 then superimposes the foreground virtual viewpoint image onto the background virtual viewpoint image thus generated, thereby generating a virtual viewpoint image.

A method for generating a foreground virtual viewpoint image of a virtual viewpoint image is described. A foreground virtual viewpoint image can be generated by calculating the color of each voxel and rendering the colored voxel using an existing CG rendering method, assuming that each voxel is a three-dimensional point represented by coordinates (Xw, Yw, Zw). Before the color calculation, first, a distance image is generated in which each pixel value represents the distance from the camera of the image capture device 2 to the surface of the three-dimensional shape of an object.

A method for generating a distance image is described. A distance image has the same width and height as a captured image and has a distance value stored in each pixel. For example, an extrinsic matrix Te is applied to the coordinates (Xw, Yw, Zw) of a point P in a group of three-dimensional points to convert the coordinates from the coordinates of a world coordinate system to camera coordinates (Xc, Yc) of a camera coordinate system. A camera coordinate system is a three-dimensional coordinate system having the center of the camera lens as its origin and defined by a lens plane (Xc, Yc) and a lens optical axis (Zc). The extrinsic matrix Te is a matrix formed by extrinsic parameters of the actual camera. With the direction in which the actual camera lens is oriented from the camera position as the origin being the positive direction of the z-axis of the camera coordinate system, the z-coordinate of the camera coordinates (Xc, Yc) is a distance value for that point as seen from the actual camera.

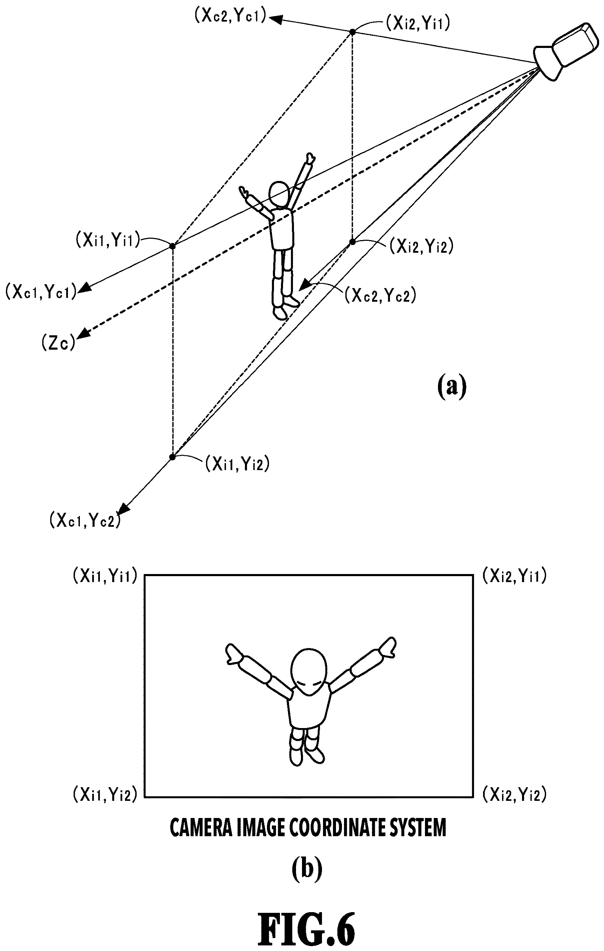

Next, image coordinates (Xi, Yi) of the camera coordinates (Xc, Yc) are calculated, and coordinates in a distance image at which to store the distance value are obtained. The image coordinates (Xi, Yi) are coordinates in a camera image coordinate system calculated by applying an intrinsic matrix Ti to normalized camera coordinates obtained by normalization of the camera coordinates (Xc, Yc) with the z-coordinate. The camera image coordinate system is, as shown in Fig. 6, a two-dimensional coordinate system defined on a plane located forward of a lens surface by a certain distance and such that the Xc-axis and the Yc-axis of the camera coordinate system and the Xi-axis and the Yi-axis of the camera image coordinate system are parallel to each other, respectively. Fig. 6(a) is a schematic diagram of the camera coordinate system, and Fig. 6(b) is a schematic diagram of the camera image coordinate system. Note that the intrinsic matrix Ti is a matrix formed by intrinsic parameters of the actual camera. In a case where a distance value of another point already calculated is stored in the pixel of the image coordinates (Xi, Yi), this value is compared with the z-coordinate of the image coordinates (Xi, Yi). Then, in a case where the z-coordinate is smaller, the z-coordinate is stored anew as the pixel value of the image coordinates (Xi, Yi). By executing the series of processing on all the points P of the group of three-dimensional points, a distance image of a single actual camera can be generated. Further, by performing processing for all the actual cameras, distance images of all the actual cameras can be generated.

Next, to assign color to a voxel, with respect to a camera including a three-dimensional point (Xw, Yw, Zw) inside its angle of view, the three-dimensional point is first converted to the camera coordinate system. Then, the three-dimensional point thus converted to the camera coordinate system is converted to the camera image coordinate system, and a distance d from the voxel to the camera and coordinates (Xi, Yi) in the camera image coordinate system are calculated. Then, the difference between the distance d and the pixel value of the coordinates (Xi, Yi) corresponding to the distance image generated previously (= the distance to the surface) is calculated, and in a case where the difference is a preset threshold or below, it is determined that the voxel is visible from the camera. In a case where the voxel is determined as being visible, the pixel value of the coordinates (Xi, Yi) in the captured image from the image capture device 2 corresponding to the camera is used as the color of the voxel. In a case where the voxel is determined as being visible from a plurality of cameras, a pixel value is obtained from the texture data on the foreground image from each of the captured images from the image capture devices 2, and for example, their average value is used as the color of the voxel. However, the color calculation method is not limited to this. For example, instead of using the average value, a pixel value in a captured image obtained from the image capture device 2 closest to the virtual viewpoint may be used. By repeating the same processing for all the voxels, colors can be assigned to all the voxels forming the three-dimensional shape data.

Although this example describes an example where the virtual viewpoint image generation unit 12 determines from which camera each three-dimensional point is visible, the present disclosure is not limited to this. In a case where the shape estimation device 3 has visibility information representing from which camera each three-dimensional point is visible, the virtual viewpoint image generation unit 12 may obtain the visibility information from the shape estimation device 3 and perform processing using the information thus obtained.

Next, a description is given of a method for generating a background viewpoint image of a virtual viewpoint image. To generate a background virtual viewpoint image, three-dimensional shape data on a background such as a stadium is obtained. As three-dimensional shape data on a background, a CG model of the stadium or the like is created in advance, and the CG model saved in the system is used. Vectors normal to the respective surfaces forming the CG model are compared to directional vectors of the cameras forming the image capture devices 2 to calculate the image capture device 2 having the surfaces within its angle of view and most directly facing them. Then, vertex coordinates of the surfaces are projected onto this image capture device 2, and texture images to be attached to the surfaces are generated and rendered using an existing texture mapping method. A background virtual viewpoint image is thus generated. A virtual viewpoint image is generated by superimposing (combining) the foreground virtual viewpoint image on (with) the background virtual viewpoint image for the virtual viewpoint image thus generated.

The description of the flowchart in Fig. 5 is continued. In S504, the teaching data generation unit 131 generates teaching data for learning of a neural network for repairing a virtual viewpoint image. Here, teaching data having a pair of input data and answer data is generated, the input data being the virtual viewpoint image corresponding to the viewpoint position of an actual camera, which has been generated in S503, the answer data being the captured image from the actual camera corresponding to the virtual viewpoint position, which has been obtained in S501. The color information in the virtual viewpoint image corresponding to the viewpoint position of the actual camera is equal to the image from the actual camera used for the shooting. Thus, this is because the virtual viewpoint image and the actual camera image are ideally equal to each other in a case where the position and attitude of a virtual viewpoint are the same as the position and attitude of the actual camera. Note that in S504, to have as many pieces of teaching data as needed for learning, data augmentation may be performed concomitantly. Examples of data augmentation methods to employ include methods employing the following processing. Specifically, as an example, there is a method employing, on a virtual viewpoint image which is input data and an actual camera image which is answer data corresponding thereto, processing of randomly cutting out the same corresponding image portion region (however, the cut image size is fixed) and processing of performing mirror inversion.

In S505, the repair learning unit 132 performs learning model (neural network) learning using the teaching data generated in S504. For example, the learning model is learned so that in response to an input of any given virtual viewpoint image, a virtual viewpoint image removed of or reduced in jelly noise can be generated as an output. A learned model obtained by the learning is outputted to the repair unit 133. Note that as a loss function used in the neural network learning, mean square error is used to measure the fidelity of the input with respect to the answer. Also, Adam is used as a method for optimizing neural network parameters to minimize the loss function. Also, as the architecture of the neural network, an architecture equivalent to the architecture known as U-Net is used. U-Net is a network architecture for performing processing while performing multiresolution analysis on images, and is characteristically robust with respect to the scale of image features. For this reason, it is possible to handle jelly noise of various sizes, and it is expected to be effective for the virtual viewpoint image repair here. This is the processing performed in the learning phase.

Next, a description is given of inference processing for actually repairing a virtual viewpoint image using a learned neural network model.

Fig. 5(b) is a diagram showing an example flowchart of inference processing for repairing a virtual viewpoint image using a learned neural network model. The camera information obtaining processing in S501 and the shape estimation information obtaining processing in S502 in Fig. 5(b) are the same as those in Fig. 5(a) and are therefore not described here.

After S502, in S513, the virtual viewpoint image generation unit 12 generates a virtual viewpoint image from any given viewpoint position. The method for generation the virtual viewpoint image is the same as the method described with S504 in Fig. 5(a). In the inference phase, a virtual viewpoint image from any given viewpoint position is generated. The virtual viewpoint image generated is outputted to the repair unit 133 to be inputted to the learned model.

In S514, the repair unit 133 inputs the virtual viewpoint image generated in S513 to the learned model learned in S505 and thereby repairs the virtual viewpoint image. Note that any given virtual viewpoint image is inputted here regardless of whether the virtual viewpoint image has jelly noise or not. The learning carried out in S505 is performed based on teaching data generated in S503, and the teaching data also includes virtual viewpoint images without jelly noise. Thus, it is expected not to perform unnecessary repair in a case where a virtual viewpoint image without jelly noise is inputted. The virtual viewpoint image repaired by the repair unit 133 is outputted to the display device 4.

Also, for example, a configuration may be employed in which the repair unit 133 repairs a virtual viewpoint image only in a case where the virtual viewpoint image has jelly noise. In this case, the image generation apparatus 1 may have a determination unit that determines whether a virtual viewpoint image contains jelly noise. The determination unit may be included in the virtual viewpoint image repair unit 13. Then, a virtual viewpoint image outputted from the virtual viewpoint image generation unit 12 is inputted to the determination unit, and the determination unit determines whether the inputted virtual viewpoint image contains jelly noise. Then, in a case where the virtual viewpoint image contains jelly noise, the virtual viewpoint image is outputted to the repair unit 133 and undergoes repair processing in the repair unit 133. Meanwhile, in a case where the virtual viewpoint image does not contain jelly noise, the virtual viewpoint image bypasses the repair unit 133 and is outputted from the determination unit to the display device 4.

Alternatively, a configuration may be employed in which a virtual viewpoint image generated by the virtual viewpoint image generation unit 12 is outputted to the virtual viewpoint image repair unit 13 for an event where jelly noise is likely to occur. For example, this configuration is employed for an event such as rugby where objects tend to get very close to each other, because a region uncapturable by any of the image capture devices tends to be generated, making it likely for jelly noise to occur. Meanwhile, for an event where subjects are unlikely to get very close to each other, a virtual viewpoint image generated by the virtual viewpoint image generation unit 12 may bypass the virtual viewpoint image repair unit 13 and be outputted directly to the display device 4. To achieve this configuration, for example, the destination to which the virtual viewpoint image generation unit 12 outputs a virtual viewpoint image may be switched automatically between the virtual viewpoint image repair unit 13 and the display device 4 based on event information. Alternatively, besides the event information, the output destination may be switched based on information indicating a change in a possibility of jelly noise occurrence, such as the closeness of subjects. Also, the image processing apparatus 1 may be configured such that the output destination is switched according to a user operation or settings.

Also, although the above learning uses teaching data formed by a pair of input data and answer data on the same event held in the same venue, the present disclosure is not limited to this. Specifically, learning may be performed using teaching data including pairs of input data and answer data that are pairs of captured images captured in various events held in a plurality of different venues and virtual viewpoint images generated thereon. For example, teaching data A may be generated based on image capture of a rugby game held in a venue A, and teaching data B may be generated based on image capture of a rugby game held in a venue B. The learning of the repair learning unit 132 may be performed using teaching data including the teaching data A and the teaching data B. Further, in addition to the teaching data A and the teaching data B, the teaching data may include teaching data C generated based on image capture of a soccer game held in a venue C, and the learning by the repair learning unit 132 may be performed using such teaching data. Also, data suitable for learning may be selected from teaching data based on information on an event or the like or user settings, and learning may be performed based on the selected teaching data.

A configuration may be employed in which jelly noise and other noise are identified in a virtual viewpoint image outputted from the virtual viewpoint image generation unit 12, e.g., automatically or according to user settings, and the virtual viewpoint image in which noise is identified is inputted to the teaching data generation unit.

As thus described, according to the present embodiment, jelly noise generated due to low-accuracy shape estimation results can be removed from a virtual viewpoint image by the after the fact processing. As a result, degradation of the image quality of a virtual viewpoint image can be reduced.

### «Second Embodiment»

In the present embodiment, processing to detect a region with jelly noise in a virtual viewpoint image and to repair the detected region is learned, divided into two neutral networks: one for detection and one for repair. Specifically, a first model for detection and a second model for repair are learned. Then, in the example to be described, these learned models are combined to have the neural networks infer repair results.

### <System Configuration>

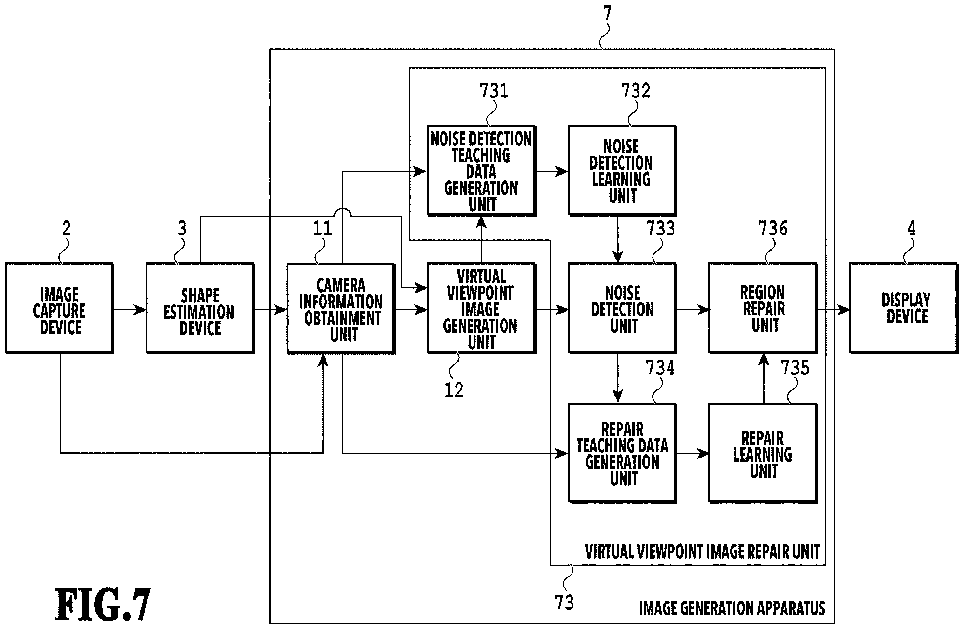

Fig. 7 is a diagram showing the configuration of an image processing system of the present embodiment. The image processing system of the present embodiment includes an image generation apparatus 7 in place of the image generation apparatus 1 described in the first embodiment. As shown in Fig. 7, the image generation apparatus 7 is connected to the image capture devices 2, the shape estimation device 3, and the display device 4 in a daisy chain or via a predetermined network. The configurations of the image capture devices 2, the shape estimation device 3, and the display device 4 are the same as those in the first embodiment. The following omits descriptions for configurations that are the same as those in the first embodiment.

The image generation apparatus 7 has the camera information obtainment unit 11, the virtual viewpoint image generation unit 12, and a virtual viewpoint image repair unit 73. Compared to the first embodiment, the function and operation of the virtual viewpoint image repair unit 73 are different.

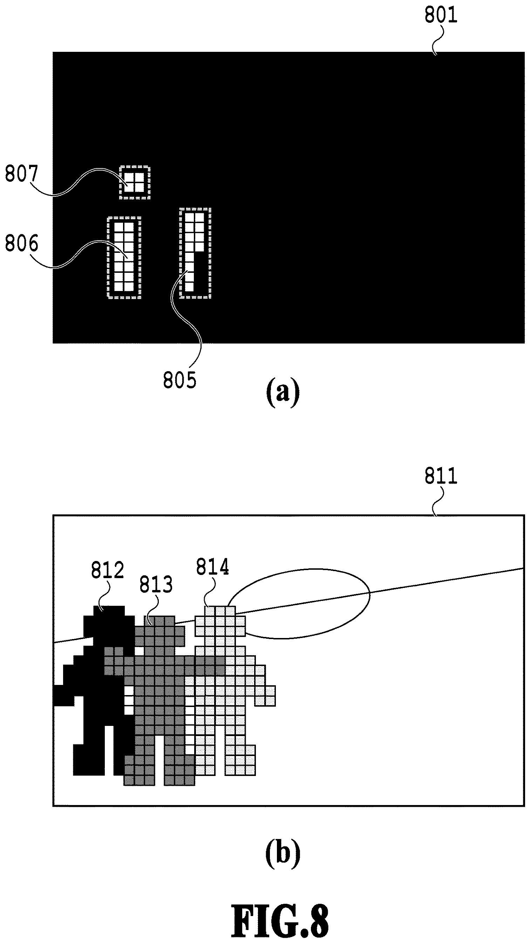

The virtual viewpoint image repair unit 73 detects which region has jelly noise in a virtual viewpoint image generated by the virtual viewpoint image generation unit 12, and repairs the detected jelly noise region. This process is described using Fig. 8.

Fig. 8 is a diagram illustrating a jelly noise map. Fig. 8(a) is a diagram showing a jelly noise map which is an image representing jelly noise regions, which is obtained by inputting a virtual viewpoint image like the one represented by the image 221 in Fig. 2(c). Fig. 8(b) is a diagram illustrating a virtual viewpoint image in which the jelly noise regions shown in Fig. 8(a) have been repaired.

Fig. 8(a) shows a jelly noise map 801 for the example of the image 221 in Fig. 2(c). Regions 805, 806, 807 in Fig. 8(a) are pixel regions corresponding to the regions 225, 226, 227 in the image 221 in Fig. 2(c) that are observed as jelly noise, respectively. An image 611 in Fig. 8(b) is an example virtual viewpoint image in which the jelly noise regions have been repaired based on the jelly noise map 801 in Fig. 8(a). Regions 812, 813, 814 in Fig. 8(b) are example image regions corresponding to the objects 202, 203, 204 in Fig. 2(a), respectively. In the present embodiment, jelly noise regions are detected, and the detected regions are targeted for repair, so that other image regions are not changed unnecessarily; thus, it is expected that the image quality of the virtual viewpoint image is improved stably.

The present embodiment assumes that the processing to detect a jelly noise region and to repair the jelly noise region is learned by two separated neural networks, and these two learned models are combined to repair a virtual viewpoint image. The virtual viewpoint image repair unit 73 of the present embodiment has a noise detection teaching data generation unit 731, a noise detection learning unit 732, a noise detection unit 733, a repair teaching data generation unit 734, a repair learning unit 735, and a region repair unit 736.

The noise detection teaching data generation unit 731 generates teaching data having, for example, the following pair. Specifically, the noise detection teaching data generation unit 731 generates teaching data formed by input data and answer data, the input data being a virtual viewpoint image generated by the virtual viewpoint image generation unit 12, the answer data being a difference region between the virtual viewpoint image and a captured image from a camera having the corresponding viewpoint obtainable from the camera information obtainment unit 11. Note that as the camera captured image used as the answer data, an image obtained by actually shooting a real space may be used, or an image generated by interpolation of captured images from two actual cameras may be used. Also, a camera simulation image obtained in a virtual three-dimensional space created by CG may be used. Constraints for these cases are the same as those in the example described in the first embodiment.

The noise detection learning unit 732 defines a loss function of the input with respect to the answer based on the teaching data generated by the noise detection teaching data generation unit 731. Then, neural network parameters are repeatedly optimized so that the loss function can be minimized or maximized, and learning is thus conducted. Then, the model obtained by the learning is outputted to the noise detection unit 733.

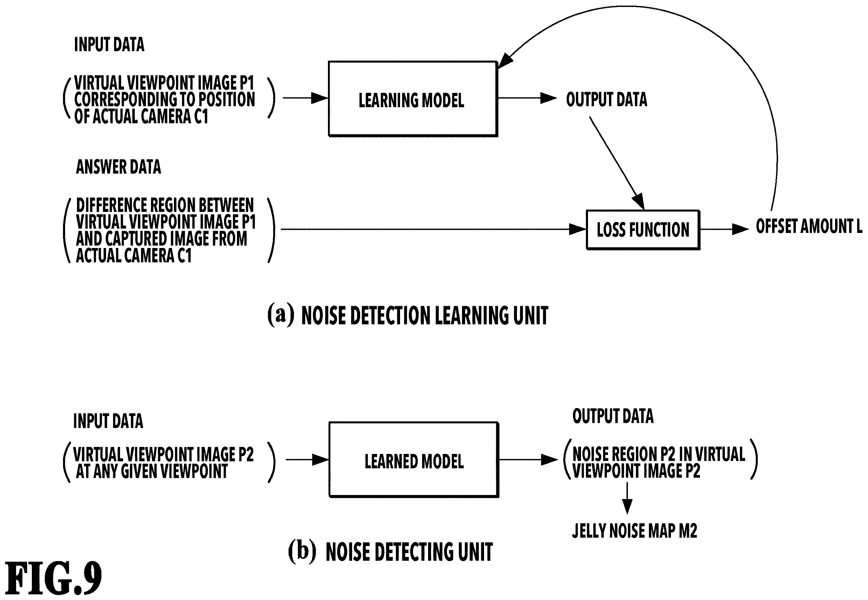

Fig. 9 is a diagram illustrating an overview of a learning model for detecting jelly noise regions. Fig. 9(a) shows an example of learning processing performed by the noise detection learning unit 732. Learning is performed using teaching data formed by input data and answer data, the input data being a virtual viewpoint image P1 corresponding to the viewpoint position of an actual camera C1, the answer data being a difference region between the virtual viewpoint image P1 and a captured image captured by the actual camera C1. Then, learning is repeated to minimize or maximize an offset amount L between the input data and the answer data. Although an actual camera at one viewpoint is taken as an example here, learning is performed repeatedly using teaching data at the corresponding viewpoints of the image capture devices 2 forming the image processing system.

Note that the noise detection learning unit 732 may include an error detecting unit and an updating unit, and their functions are the same as those included in the repair learning unit 132 described in the first embodiment. Also, the present embodiment assumes that deep learning, which itself generates feature amounts and connection weighting coefficients for learning, is performed using a neural network. Note that as the network structure of a neural network used, any method may be employed as long as an input to and an output from the network are image data and the relation between the input and the output can be learned sufficiently.

The noise detection unit 733 inputs a virtual viewpoint image to a learned model obtained by the noise detection learning unit 732 and thereby detects which region in the virtual viewpoint image has jelly noise. The jelly noise region detected here may be outputted to the repair teaching data generation unit 734 and the region repair unit 736 after being converted to an image format which is called a jelly noise map and has the same size as the inputted virtual viewpoint image. Note that the learning may be performed so that the jelly noise map itself is outputted from the noise detection learning unit 732. Also, the virtual viewpoint image given as an input may also be outputted to the repair teaching data generation unit 734 and the region repair unit 736. In the repair learning phase, the virtual viewpoint image given as an input and the jelly noise map obtained from the neural network are outputted to the region repair unit 736. In the repair inference phase, the virtual viewpoint image given as an input and the jelly noise map obtained from the neural network are outputted to the region repair unit 736.

Fig. 9(b) shows an example of jelly noise region detection processing (inference processing) performed by the noise detection unit 733. As a result of inputting, as input data, a virtual viewpoint image P2 at any given virtual viewpoint to the learned model obtained by the noise detection learning unit 732, a jelly noise region R2 in the virtual viewpoint image P2 is detected. Then, the jelly noise region R2 is converted to a jelly noise map M2 having the same size as the virtual viewpoint image P2.

The repair teaching data generation unit 734 generates teaching data formed by a pair of input data and answer data, the input data being the virtual viewpoint image and the jelly noise map obtained from the noise detection unit 733, the answer data being a captured image from a camera having the corresponding viewpoint obtainable from the camera information obtainment unit 11. Note that like in the example described with the noise detection teaching data generation unit 731, as the camera captured image used as answer data, an image obtained by actually shooting a real space may be used, or an image generated by interpolation of captured images from two actual cameras may be used. Also, a camera simulation image obtained in a virtual three-dimensional space created by CG (computer graphics) may be used. Constraints for these cases are the same as those in the example described in the first embodiment.

The repair learning unit 735 defines a loss function of the input with respect to the answer based on the teaching data generated by the repair teaching data generation unit 734. Then, neural network parameters are repeatedly optimized so that the loss function can be minimized or maximized, and the learning is thus conducted. Then, the model obtained by the learning is outputted to the region repair unit 736.

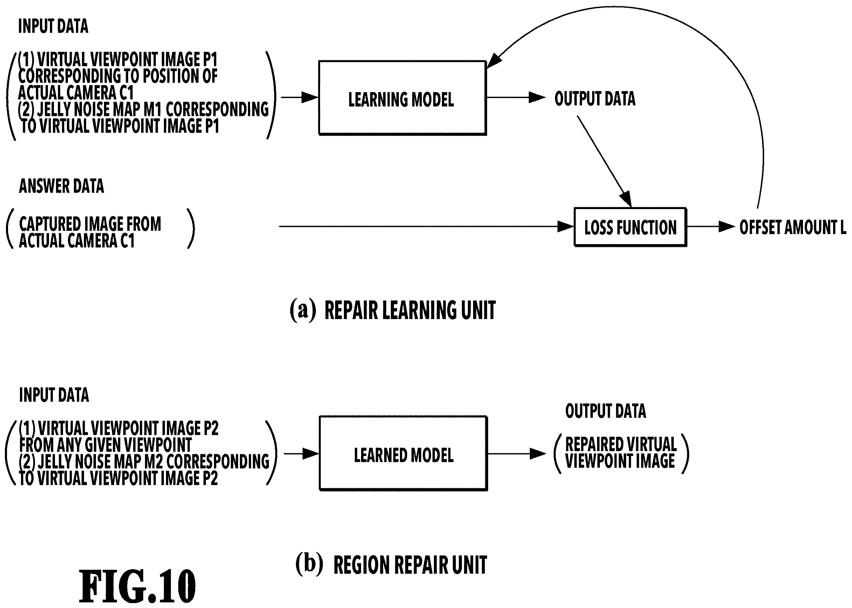

Fig. 10 is a diagram illustrating an overview of a learning model for repairing a jelly noise region in a virtual viewpoint image. Fig. 10(a) shows an example of learning processing performed by the repair learning unit 735. Learning is performed using teaching data formed by input data and answer data, the input data being a virtual viewpoint image P1 corresponding to the viewpoint position of an actual camera C1 and a jelly noise map M1 corresponding to the virtual viewpoint image PI, the answer data being a captured image captured by the actual camera C1. Then, learning is repeated to minimize or maximize an offset amount L between the input data and the answer data. Although an actual camera at one viewpoint is taken as an example here, learning is performed repeatedly using teaching data at the corresponding viewpoints of the image capture devices 2 forming the image processing system.

Note that the repair learning unit 735 may include an error detecting unit and an updating unit, and their functions are the same as those included in the repair learning unit 132 described in the first embodiment. Also, the present embodiment assumes that deep learning, which itself generates feature amounts and connection weighting coefficients for learning, is performed using a neural network. Note that as the network structure of a neural network used, any method may be employed as long as an input to and an output from the network are image data and the relation between the input and the output can be learned sufficiently.

The region repair unit 736 inputs the jelly noise map and the virtual viewpoint image given from the noise detection unit 733 to the learned model obtained by the repair learning unit 735 and thereby repairs the virtual viewpoint image. The repaired virtual viewpoint image is outputted to the display device 4.

Fig. 10(b) shows an example of jelly noise region repair processing (inference processing) performed by the region repair unit 736. A virtual viewpoint image P2 from any given virtual viewpoint and a jelly noise map M2 corresponding to the virtual viewpoint image P2 are inputted as input data to the learned model obtained by the repair learning unit 735. Then, a repaired virtual viewpoint image in which the jelly noise region R2 in the virtual viewpoint image P2 has been repaired is outputted from the learned model.

### <Processing Flow>

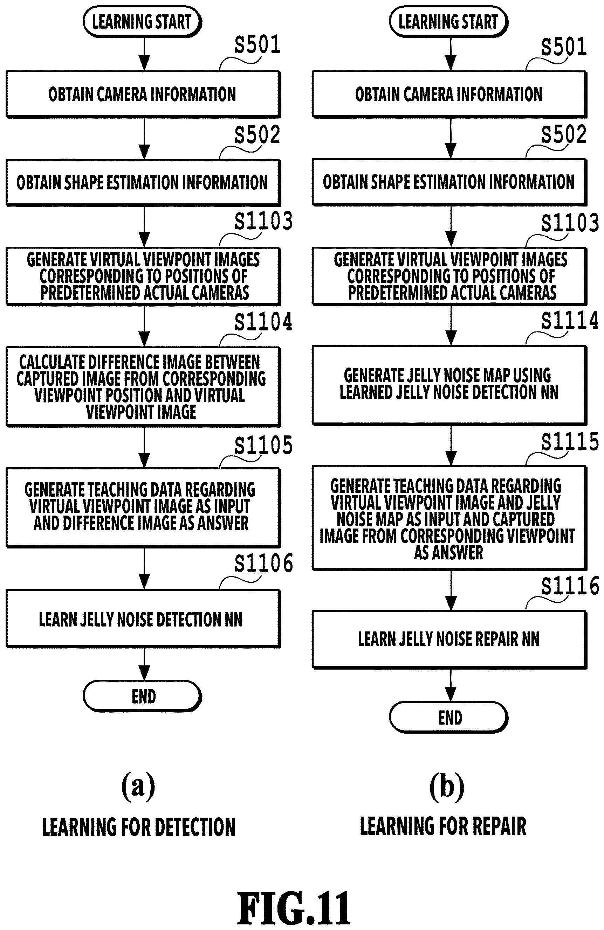

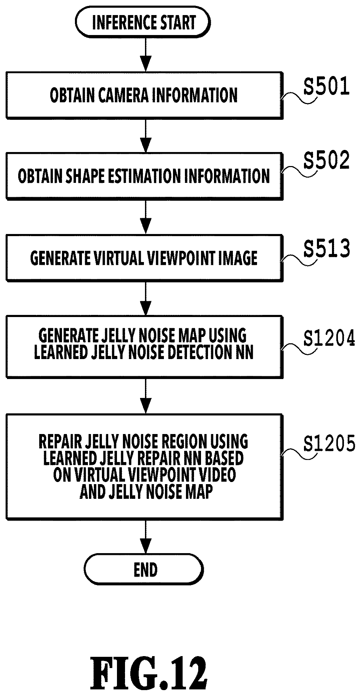

Figs. 11 and 12 are flowcharts showing an example of processing performed by the image generation apparatus 7 of the present embodiment. Using the flowcharts shown in Figs. 11 and 12, a description is given of processing performed by the image generation apparatus 7 of the present embodiment. Note that steps denoted by the same numbers as those in the flowchart in Fig. 5 are the same as the steps described in the first embodiment and are therefore not described here.

First, a flowchart for processing for learning of a neural network for detecting a jelly noise region in a virtual viewpoint image is described using Fig. 11(a). After the processing in S501 and S502, processing in S1103 is performed.

In S1103, the virtual viewpoint image generation unit 12 generates a group of virtual viewpoint images corresponding to the positions of the actual cameras. The group of virtual viewpoint images thus generated are outputted to the noise detection teaching data generation unit 731. The virtual viewpoint images generated in S1103 are used as input data for neural network learning. Note that unlike the first embodiment, in S1103, the group of virtual viewpoint images outputted to the noise detection teaching data generation unit 731 may be only virtual viewpoint images containing jelly noise or may include virtual viewpoint images containing no jelly noise at a rate of approximately 1%. By predominantly using scenes in which jelly noise occurs as input data for learning, the characteristics of a jelly noise region can be learned predominantly. Also, by also adding a small number of virtual viewpoint images without jelly noise instead of using virtual viewpoint images all containing jelly noise, it is expected to improve the robustness of the learned model.

In S1104, the noise detection teaching data generation unit 731 calculates a difference image between a captured image from an actual camera obtained in S501 and the virtual viewpoint image generated in S1103 corresponding to the viewpoint position of this actual camera. Note that this difference image is a binary image such that each pixel of a foreground region has 1 as its pixel value in a case where the absolute value of the difference between the two images is a threshold or greater and has 0 otherwise. Note that all the pixels of a background image have 0 as their pixel values. In other words, pixels whose difference between two images is the threshold or greater are detected as jelly noise. Here, the threshold is an allowable value of whether to detect the pixel as jelly noise, and any value can be set depending on how much difference to allow. In the present embodiment, as an example, the threshold is set to 5. Note that in the example described in the present embodiment, a difference image between a virtual viewpoint image and a captured image from the corresponding viewpoint is used as answer data on a jelly noise region, but in S1104, it is only necessary to be able to obtain data (image data) to be used as answer data. In a different example, a weighted image based on the visibility of a group of three-dimensional points forming a subject from each camera may be obtained, or a mask image having a jelly noise region manually specified by a user may be obtained. Note that a weighted image based on the visibility from each camera is a weighted image generated such that a pixel which is projection of a three-dimensional point of note onto the camera has a weight of 1 in a case where the three-dimensional point is visible from the camera and has a weight of 0 in a case where the three-dimensional point is invisible from the camera. This is because jelly noise often occurs at a region invisible from the group of cameras used for shooting, and it is therefore expected that a jelly noise region is detected inside the weighted image. Note that in a case where a user manually specifies a jelly noise region, a jelly noise map may be created from the start based only on virtual viewpoint images. Also, a corrected image may be used such that an image representing a jelly noise map created by the above method is corrected only in a region with excess or deficiency of jelly noise. In a case where a user manually specifies a jelly noise region, a step for specifying a jelly noise region is additionally provided.

In S1105, the noise detection teaching data generation unit 731 generates teaching data for learning of a neural network for detecting jelly noise in a virtual viewpoint image. Note that here, teaching data formed by a pair of input data and answer data is generated, the input data being the virtual viewpoint image generated in S1103, the answer data being the difference image calculated in S1104. Since the color information for a virtual viewpoint image is equal to that for an image from an actual camera used for the shooting, the virtual viewpoint image and the actual camera image are ideally equal to each other in a case where the position and attitude of the virtual viewpoint and the position and attitude of the actual camera are the same. Thus, this is because the difference image is expected to have a jelly noise region emerging therefrom. Note that in S1105, to have as many pieces of teaching data as needed for learning, data augmentation may be performed concomitantly. Examples of data augmentation methods to employ include methods employing the following processing. Specifically, there is a method employing, on a virtual viewpoint image which is input data and a difference image which is answer data corresponding thereto, processing of randomly cutting the same corresponding image portion region (however, the cut image size is fixed) and processing performing mirror inversion.

In S1106, the noise detection learning unit 732 performs neural network learning using the teaching data generated in S1105. More specifically, the noise detection learning unit 732 performs neural network learning so that a jelly noise map which is an image representing a jelly noise region can be generated as an output in response to input of any given virtual viewpoint image. The learned model obtained by the learning is outputted to the noise detection unit 733.

In the present embodiment, a jelly noise map which is an image representing a jelly noise region and obtained as an output of the learned model is assumed to be such that each pixel has a pixel value indicating whether it is jelly noise, i.e., 0 or 1 (binary). Thus, the jelly noise detection can be interpreted as the labeling problem, and thus, crossentropy loss used for evaluation of whether the label is correct is used as a loss function for use in neural network learning. Also, the stochastic gradient method is used as a method for optimizing neural network parameters to minimize the loss function. Also, as the architecture of the neural network, an architecture equivalent to the architecture used in SegNet is used, SegNet being known as being capable of highly-accurate segmentation. Although a jelly noise map is binary in the processing performed in the present embodiment, the processing may be performed handling a jelly noise map as multilevel. In that case, the labels may be divided into multilevel labels, or a pixel value may be regarded not as a label but as the likelihood of jelly noise so that a probability, not a label value, may be outputted as an output from the neural network for each pixel.

Note that a user may add processing to the jelly noise map. For example, in a later jelly noise repair NN, a user may identify noise that the user wants repaired at the same time, and annotating processing may be performed on an image region of the noise thus identified. All that is needed is to make the pixel values of the region thus annotated be the same as the pixel values of the jelly noise region. Also, a user may identify noise that the user wants repaired at the same time, and a combined map generated from a jelly noise map and a map including the region of the identified noise may be used as a jelly noise map, the combined map having, as noise, a region included as noise in either of the maps.

Next, a description is given of a flowchart shown in Fig. 11(b) for processing of learning of a neural network for repairing a jelly noise region in a virtual viewpoint image. The processing steps S501, S502, S1103 are the same as those shown in Fig. 11(a). After these processing steps, processing in S1114 is performed.

In S1114, the noise detection unit 733 generates a jelly noise map by inputting the virtual viewpoint image corresponding to the actual camera position generated in S1103 to the learned model obtained by the noise detection learning unit 732. The generated jelly noise map is outputted to the repair teaching data generation unit 734.

In S1115, the repair teaching data generation unit 734 generates teaching data for neural network learning for performing repair processing on the jelly noise region in the virtual viewpoint image. The teaching data generated here is formed by input data and answer data, the input data being the virtual viewpoint image generated in S1103 and the jelly noise map generated in S1114, the answer data being the captured image from the actual camera corresponding to the position of the virtual viewpoint, obtained in S501. This is because, since the color information for a virtual viewpoint image is equal to that for an image from the actual camera used for the shooting, the virtual viewpoint image and the actual camera image are ideally equal to each other in a case where the position and attitude of the virtual viewpoint and the position and attitude of the actual camera are the same.

In S1116, the repair learning unit 735 performs neural network learning using the teaching data generated in S1115. More specifically, the repair learning unit 735 performs neural network learning so that a virtual viewpoint image in which the jelly noise region has been repaired can be generated as an output in response to input of any given virtual viewpoint image and a jelly noise map corresponding thereto. Note that the virtual viewpoint image and the jelly noise map that are given as an input are inputted to a single layer in the neural network, i.e., as a single multi-channel image integrating the virtual viewpoint image and the jelly noise map. The learned model obtained by the learning is outputted to the region repair unit 736. Note that as a loss function used in the neural network learning, mean square error is used to measure the fidelity of the input with respect to the answer. Note, however, that error is calculated only for pixels forming a region determined as jelly noise in the jelly noise map. By calculating error only for pixels forming a jelly noise region, the image quality of a non-jelly-noise region can be left unaffected. Also, Adam is used as a method for optimizing neural network parameters to minimize the loss function. Also, as the architecture of the neural network, an architecture having a partial convolution layer in place of a convolution layer in U-Net employed in the first embodiment is used. The partial convolution layer gives the positions of pixels used for computation as a mask image, and thereby performs processing using only the values in the masked region. Thus, a partial convolution layer is suitable for image inpainting processing. A partial convolution layer is effective because the virtual viewpoint image repair in the present embodiment can be interpreted as inpainting processing of a jelly noise region.

Next, using Fig. 12, a description is given of a flowchart of inference processing for actually repairing a virtual viewpoint image using the learned neural network models for jelly noise region detection and repair. In Fig. 12, processing in S1204 is performed after the processing in S501, S502, and S513 described in the first embodiment.

In S1204, the noise detection unit 733 inputs a virtual viewpoint image generated in S513 to the learned model obtainable from the noise detection learning unit 732 and generates a jelly noise map. Note that any given virtual viewpoint image is inputted here in order to detect whether jelly noise is contained. The jelly noise map generated is outputted to the region repair unit 736 to be inputted to the learned model.

In S1205, the region repair unit 736 inputs the corresponding virtual viewpoint image given and the jelly noise map generated in S1204 to the learned model learned in S1116 and thereby repairs the virtual viewpoint image. Note that any given virtual viewpoint image is inputted regardless of the presence of jelly noise. This is because the learned model learned in S1116 has been learned to repair only jelly noise regions, and unless a jelly noise region is detected in S1205, other regions are unaffected. As a result, jelly noise regions can be improved with side effects mitigated. The repaired virtual viewpoint image is outputted to the display device 4.

Although any given virtual viewpoint image is inputted to the region repair unit 736 regardless of the presence of jelly noise in the processing in Fig. 12 in the example described, the present disclosure is not limited to this. In a case where there is no jelly noise region in the jelly noise map generated in S1204, the corresponding virtual viewpoint image may be not inputted to the region repair unit 736 to omit repair processing.

As thus described, the present embodiment can detect which region in a virtual viewpoint image has jelly noise which occurs due to low-accuracy shape estimation results and repair the jelly noise region based on the detection result. Thus, a virtual viewpoint image can be repaired with non-jelly-noise regions unaffected. As a result, it is possible to reduce degradation of the image quality of the virtual viewpoint image.

### <Other Embodiments>

Although the above embodiments have described examples where the image generation apparatus includes both the learning unit and the repair unit or the detection unit (inference unit), the learning unit and the inference unit may be included in separate image generation apparatuses. For example, learning may be performed in a first image generation apparatus including the learning unit. Then, the learned model learned may be sent to a second image generation apparatus including the inference unit, and inference processing may be performed in the second image generation apparatus.

Also, in the above embodiments, the learned model may be created in a different environment (outside the image processing system in Fig. 1), and noise repair may be performed by applying the learning results.

Also, although noise regions are corrected using machine learning in the above embodiments, the present disclosure is not limited to this. It is also possible to obtain a virtual viewpoint image removed of or reduced in noise by extracting a difference by comparison between a virtual viewpoint image from a predetermined virtual viewpoint and an image from an actual camera which has a viewpoint which is the same as or closest to the virtual viewpoint and correcting the virtual viewpoint image using the difference. In this processing, the comparison may be performed after performing projective transformations or the like to bring the actual camera image to or closer to the virtual viewpoint of the virtual viewpoint image to be compared with. Also, a virtual viewpoint image may be compared with an image obtained by appropriately blending a plurality of actual camera images (combining processing).

The present disclosure can also be implemented by processing in which a program for implementing one or more functions of the above embodiments is supplied to a system or an apparatus via a network or a storage medium, and one or more processors in a computer in the system or apparatus read and execute the program. The present disclosure can also be implemented by a circuit (e.g., an ASIC) implementing one or more functions.

The present disclosure is not limited to the above embodiments and can be altered and modified variously without departing from the spirit and scope of the present disclosure. Thus, the claims below are attached hereto to publicize the scope of the present disclosure.

This application claims the benefit of Japanese Patent Application No. 2020-023374, filed February 14, 2020, which is hereby incorporated by reference wherein in its entirety.

## Claims

1. An image processing apparatus comprising:
obtainment means for obtaining a virtual viewpoint image generated based on a plurality of captured images obtained by image capture of an object by a plurality of image capture devices from a plurality of viewpoints and three-dimensional shape data on the object; and
removal means for removing noise in the virtual viewpoint image obtained by the obtainment means, the noise being generated due to accuracy of the three-dimensional shape data.

2. The image processing apparatus according to claim 1, wherein
the removal means removes the noise using a learned model learned based on teaching data having input data and answer data, the input data being a virtual viewpoint image from a viewpoint corresponding to a predetermined position and attitude, the answer data being an image corresponding to the predetermined position and attitude.

3. The image processing apparatus according to claim 2, wherein
the predetermined position and attitude are a position and attitude of a predetermined image capture device, and
the image corresponding to the predetermined position and attitude is a captured image obtained by image capture by the predetermined image capture device.

4. The image processing apparatus according to any one of claims 1 to 3, wherein
the removal means includes
detection means configured to detect a region with the noise in the virtual viewpoint image and
repair means configured to repair the region with the noise in the virtual viewpoint image detected by the detection means.

5. The image processing apparatus according to claim 4, wherein
the detection means performs the detection using a first model which is a learned model learned based on teaching data having input data and answer data, the input data being a virtual viewpoint image from a viewpoint corresponding to a predetermined position and attitude, the answer data being a difference image indicating a difference between the virtual viewpoint image and an image corresponding to the predetermined position and attitude.

6. The image processing apparatus according to claim 5, wherein
as the answer data, the detection means uses a corrected image obtained by a user correcting the difference image, instead of the difference image.

7. The image processing apparatus according to claim 4, wherein
the detection means performs the detection using a first model which is a learned model learned based on teaching data having input data and answer data, the input data being a virtual viewpoint image from a viewpoint corresponding to a predetermined position and attitude, the answer data being an image based on visibility of three-dimensional shape data forming an object in an image corresponding to the predetermined position and attitude, the object shown in the image.

8. The image processing apparatus according to claim 7, wherein
as the answer data, the detection means uses a corrected image obtained by a user correcting the image based on visibility, instead of the image.

9. The image processing apparatus according to claim 4, wherein
the detection means performs the detection using a first model which is a learned model learned based on teaching data having input data and answer data, the input data being a virtual viewpoint image from a viewpoint corresponding to a predetermined position and attitude, the answer data being a mask image such that a user sets a noise region in an image corresponding to the predetermined position and attitude.

10. The image processing apparatus according to claim 9, wherein
the predetermined position and attitude are a position and attitude of a predetermined image capture device, and
the image corresponding to the predetermined position and attitude is a captured image obtained by image capture by the predetermined image capture device.

11. The image processing apparatus according to any one of claims 4 to 10, wherein
the repair means performs the repair using a second model which is a learned model learned based on teaching data having input data and answer data, the input data being a virtual viewpoint image from a viewpoint corresponding to a predetermined second position and attitude and the region in the virtual viewpoint image detected by the detection means as having the noise occurring therein, the answer data being an image corresponding to the second position and attitude.

12. The image processing apparatus according to claim 11, wherein
the detection means detects, in the virtual viewpoint image, a region having noise occurring therein and outputs the virtual viewpoint image and the detected region to the repair means, and
the repair means inputs the virtual viewpoint image and the region outputted from the detection means to the second model and thereby repairs the noise in the region.

13. The image processing apparatus according to claim 11 or 12, wherein
the second position and attitude are a position and attitude of a predetermined image capture device, and
the image corresponding to the second position and attitude is a captured image obtained by image capture by the predetermined image capture device.

14. An image processing apparatus comprising:
obtainment means for obtaining a virtual viewpoint image corresponding to a virtual viewpoint, the virtual viewpoint image being generated based on a plurality of captured images obtained by image capture of an object by a plurality of image capture devices from a plurality of viewpoints; and
correction means for correcting the virtual viewpoint image obtained by the obtainment means based on, among the plurality of captured images, at least a captured image captured by an image capture device that captures the object from a viewpoint corresponding to the virtual viewpoint.

15. An image processing apparatus comprising:
obtainment means for obtaining a virtual viewpoint image corresponding to a virtual viewpoint, the virtual viewpoint image being generated based on a plurality of captured images obtained by image capture of an object by a plurality of image capture devices from a plurality of viewpoints; and
correction means for correcting the virtual viewpoint image obtained by the obtainment means based on learning results based on teaching data having input data and answer data, the input data being a plurality of virtual viewpoint images corresponding to the plurality of viewpoints, the answer data being the plurality of captured images obtained by image capture by the plurality of image capture devices corresponding to the plurality of viewpoints.

16. An image processing method comprising:
obtaining a virtual viewpoint image generated based on a plurality of captured images obtained by image capture of an object by a plurality of image capture devices from a plurality of viewpoints and three-dimensional shape data on the object; and
removing noise in the virtual viewpoint image obtained by the obtaining, the noise being generated due to accuracy of the three-dimensional shape data.

17. An image processing method comprising:
obtaining a virtual viewpoint image corresponding to a virtual viewpoint, the virtual viewpoint image being generated based on a plurality of captured images obtained by image capture of an object by a plurality of image capture devices from a plurality of viewpoints; and
correcting the virtual viewpoint image obtained by the obtaining based on, among the plurality of captured images, at least a captured image captured by an image capture device that captures the object from a viewpoint corresponding to the virtual viewpoint.

18. An image processing method comprising:
obtaining a virtual viewpoint image corresponding to a virtual viewpoint, the virtual viewpoint image being generated based on a plurality of captured images obtained by image capture of an object by a plurality of image capture devices from a plurality of viewpoints; and
correcting the virtual viewpoint image obtained by the obtaining based on learning results based on teaching data having input data and answer data, the input data being a plurality of virtual viewpoint images corresponding to the plurality of viewpoints, the answer data being the plurality of captured images obtained by image capture by the plurality of image capture devices corresponding to the plurality of viewpoints.

19. A method for generating a learned model, the method comprising:
obtaining a plurality of captured images obtained by image capture of an object by a plurality of image capture devices from a plurality of viewpoints and a plurality of virtual viewpoint images corresponding to the plurality of viewpoints, the plurality of virtual viewpoint images being generated based on the plurality of captured images; and
generating a learned model based on teaching data having input data and answer data, the input data being the virtual viewpoint images obtained by the obtaining, the answer data being the captured images obtained by the obtaining.

20. A program for causing a computer to function as the image processing apparatus according to any one of claims 1 to 15.
